Europäisches Patentamt

European Patent Office

Office européen des brevets

(19)

(11) Publication number: 0 140 705 B1

(12) EUROPEAN PATENT SPECIFICATION

(45) Date of publication of patent specification: 08.04.92    (51) Int. Cl.⁵: H04N 7/16

(21) Application number: 84307470.9

(22) Date of filing: 30.10.84

(54) Television scrambling and descrambling method and apparatus.

(30) Priority: 31.10.83 US 547070
31.10.83 US 547027
31.10.83 US 547413

(43) Date of publication of application:
08.05.85 Bulletin 85/19

(45) Publication of the grant of the patent:
08.04.92 Bulletin 92/15

(84) Designated Contracting States:
DE FR GB IT NL

(56) References cited:
WO-A-81/03593
CH-A- 460 417
US-A- 2 817 824
US-A- 2 977 434
US-A- 3 538 243

13th International T.V. Sympsium, May 28 -
June 2, 1983, Montreux, Ch, pages 1-10 O.A.
Hoang: "The memory card. Its possible use
to pay tv satellite broadcasting."

(73) Proprietor: R F MONOLITHICS, INC.
4441 Sigma Road
Dallas, TX 75234(US)

(72) Inventor: Ragan, Lawrence H. c/o R.F. Mon-
olithics, Inc.
4441 Sigma Road
Dallas Texas 75234(US)
Inventor: Hartmann, Clinton S. c/o R.F. Mon-
olithics, Inc.
4441 Sigma Road
Dallas Texas 75234(US)
Inventor: Ash, Darrell L. c/o R.F. Monolithics,
Inc.
4441 Sigma Road
Dallas Texas 75234(US)

(74) Representative: Brunner, Michael John et al
GILL JENNINGS & EVERY 53-64 Chancery
Lane
London WC2A 1HN(GB)

EP 0 140 705 B1

# Description

This invention relates to a method and apparatus for preventing a television signal from being acceptably received by an unauthorised television receiver while maintaining the television signal recoverable by an authorised receiver.

The invention particularly relates to a system in which intelligible television signals are provided to television receivers by using an "electronic ticket" to descramble received television signals to produce intelligible video signals. If an attempt is made to use an invalid ticket, the ticket will be rendered unusable. Further, after a selected program has been substantially completed, a "valid" ticket will self-destruct so that it cannot be used again.

Subscription television is now in wide and growing use in both cable television and over-the-air systems. In over-the-air systems, preventing unauthorised receivers from receiving the transmission is a major problem for subscription services, but even cable television system organisers might desire to have different classes of customers who can be serviced over the same cable. For instance, a special rate might be charged for customers who want to view certain sporting events or first run movies. In order to solve these problems, many systems have been developed for preventing the reception of an acceptable television signal by unauthorised receivers.

Methods of scrambling and descrambling television signals to prevent unauthorised viewing of protected material have been proposed almost since the inception of television. Various methods, from moving mirrors as shown in US-A-2531974, to inserted carriers as shown in U.S. Patent 4 074 311 have been proposed. Some systems in use today seek to modify the synchronisation pulses in the video signal as shown in U.S. Patent 3 924 059, or insert interfering video signals which are subsequently removed in the descrambling device as shown in U.S. Patent 4 112 464, or insert interfering carriers at the transmitter which are subsequently removed in the descrambling device with notch filters as shown in U.S. Patent 4 074 311.

Randomised switching between inverted and non-inverted video is expensive to perform in the decoder function, requiring demodulation of the received coded signal, and in the case of a decoder which normally is placed on the top of a video set, the remodulation of the signal after it has been restored to viewable condition. While the systems using injection of interfering carrier systems do not require demodulation and remodulation, they have other disadvantages. For instance, such systems can be easily defeated by persons with only modest means and effort. Also, extra transmitter power must be devoted to the interfering carrier. This is detrimental in cable systems, not so much for the slight penalty in consumed energy, but because of the care and expense that are involved in maintaining linearity in all the amplifiers that must amplify the signals. The linearity problem becomes especially severe in over-the-air transmission systems because of the high transmitter power involved.

Furthermore, synchronisation pulse modification or suppression system techniques are easy to defeat. On the other hand, these techniques lead to very effective scrambling and good quality pictures after descrambling. By combining this technique with the present invention a scrambling-descrambling system is obtained that is both secure and low in cost and delivers good quality descrambled video signals.

US-A-3538243 discloses a system for transmitting and receiving scrambled video signals wherein the video signals from the TV camera are scrambled and then combined with a carrier for transmission, the receiver including a record card and descrambling the scrambled video signal.

US-A-2977434 discloses a similar system in which the video signal is sporadically delayed, a record card again being used in the receiver.

US-A-2817824 discloses another similar system, wherein the record card is capable of being used as a plug-in unit.

The present invention alleviates the disadvantages of the prior art systems by providing a television scrambling and unscrambling system which utilises a decoder or descrambler in the television signal receiving network which has an "electronic ticket" forming a part thereof and which is a removable part of the circuit and necessary to descramble the signal. The electronic ticket can be purchased for a particular programme and inserted in the decoder which is coupled to the video set of the user. The ticket includes a delay line to descramble the signal being received for viewing which may be a surface acoustic wave (SAW) device.

SAW devices are well known in the art and are formed on piesoelectric substrates by attaching input and output transducers thereto. Electrical signals applied to the input transducer create surface waves which travel to the output transducer and create an electrical output.

A "fusible link" is preferably formed in the video signal path on the surface of the SAW device, and is destroyed by circuitry in the decoder that is activated when a coded signal is transmitted with the scrambled signal. All unauthorised tickets which are active at the time a verification signal is transmitted are effectively disabled by the decoder, which destroys the fusible link and renders the ticket unusable.

The ticket SAW device is preferably packaged in plastics material in such a way that the SAW device is almost certain to be destroyed by opening the package. This means that the device is so constructed that it is extremely difficult to copy.

The electronic ticket can also include a ROM (read-only memory) which contains a code to identify proper tickets for use with particular programmes. In the event the code produced by a particular ticket does not agree with the verifying code transmitted with the scrambled signal, the invalid or unauthorised ticket will be rendered unusable by the fusible link being destroyed.

The electronic ticket is very simple in construction and can be reliably mass produced at low unit cost, thereby providing a very cost-effective solution to the problems not solved by prior art attempted solutions.

Inasmuch as the attenuation may vary from ticket to ticket, a variable attenuator may be provided to balance the system and to compensate for insertion loss differences of the SAW device from ticket to ticket.

In addition, a variable phase shifter may be provided for matching variations in phase shift or delay variations from ticket to ticket.

According to one aspect of the invention there is provided apparatus for supplying intelligible television signals and corresponding synchronisation signals to authorised receivers only, comprising transmitting means for transmitting scrambled signals of a video programme; means coupled to the scrambling means and the transmitting means for coupling synchronisation signals and the scrambled signals to the transmitter for transmission; a receiver for receiving the signals; a descrambling unit coupled to the receiver having means for recovering the synchronisation signals, intercepting and descrambling the scrambled signals, and having an output for coupling the descrambled intelligible television signals to a video receiver; a removable electronic ticket; a delay line for receiving the scrambled signals and producing an output; and, means coupled to the delay line and the synchronisation signal recovering means for descrambling the signals by using the recovered synchronisation signals to cause the delay line to delay alternate portions of the television signals complementary to those portions delayed in the transmitter, whereby the video picture produced by the descrambled signal is intelligible; characterised in that:

the transmitting means includes means for scrambling the television signal; and,

the electronic ticket has descrambling circuitry including the delay line.

According to another aspect of the invention,

there is provided apparatus for descrambling transmitted television signals, comprising descrambling means having an input for receiving the television signals and an output for coupling the television signals to a video receiver; an electronic ticket removably coupled to the descrambling means, the descrambled signals being fed via the output to the video receiver for viewing; and, a delay line; characterised in that:

the descrambling means is for descrambling scrambled television signals, the scrambled television signals being descrambled by descrambling means on the ticket and the descrambling unit, in combination; and in that the electronic ticket comprises descrambling circuitry including the delay line for receiving the scrambled signals and producing an output. According to a further aspect of the invention, there is provided a method for selectively supplying intelligible television signals to a video receiver as set out in claim 17.

According to a further aspect of the invention, there is provided an electronic ticket for descrambling transmitted television and synchronisation signals for use in a video receiver, comprising first terminals for receiving the television signals; and, second terminals for coupling the partially descrambled output television signal to the video receiver; characterised by:

descrambling circuitry including a delay line having its input coupled to the first terminals for producing at least a partially descrambled television signal at its output;and means for enclosing portions of the first and second terminals and the delay line in a unitary package whereby the ticket can be used as a removable plug-in unit.

Embodiments of the invention will now be described, by way of example, with reference to the accompanying drawings, wherein:

Figure 1 is a schematic diagram of apparatus for scrambling a television signal and for transmitting the scrambled signal along with synchronisation signals, an interference signal and a verification code to television receivers or displays;

Figure 2 is a schematic representation of a typical receiver coupled to a display unit through a descrambling unit which has an electronic ticket enabling the signal to be descrambled;

Figure 3 is a schematic block diagram of the descrambler with electronic ticket which is used in the receiver circuit to provide an intelligible video signal to a video display such as a television set;

Figure 4 is a circuit diagram of a switch driver and ticket destruct circuitry which switches the descrambled signal and which can destroy an invalid ticket that is being used to descramble a received signal;

Figure 5 is a diagrammatic representation of a surface acoustic wave device which forms part of the electronic ticket for descrambling the received signal;

Figure 6 is a diagrammatic representation of the manner of construction of the electronic ticket on a surface acoustic wave device and includes a read only memory decoder for identifying the respective ticket;

Figure 7 is a pictorial view of a descrambler having a receptacle for the electronic ticket and necessary controls thereon;

Figure 8 is a pictorial representation of an electronic ticket which could be used with the descrambler of Figure 7;

Figure 9 is an end view of the electronic ticket shown in Figure 8;

Figure 10 is a pictorial representation of an alternative embodiment of an electronic ticket wherein the leads for conducting signals are on one side of the ticket only; and

Figure 11 is a diagrammatic representation of an alternative embodiment of the electronic ticket for descrambling the received video signal.

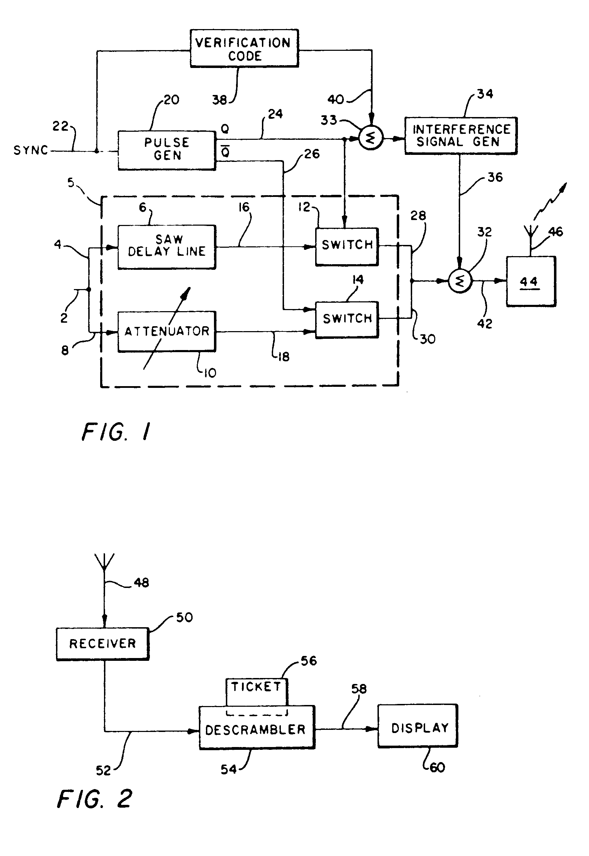

Referring to Figure 1 and Figure 2 of the drawings, a system according to the present invention for transmitting and receiving a television signal comprising a carrier and a video signal includes apparatus for preventing the video signal from being acceptably displayed by an unauthorised video receiver while maintaining the video signal recoverable by an authorised receiver. While the system may be utilised with video systems including radar, sonar, games, various information display systems, and the like, the description herein will refer to television systems for ease and simplicity of explanation. Further, while the system is discussed in terms of "over-the-air" television, the system will function equally well with and is directly applicable to cable television systems.

The apparatus includes a television signal on a line 2 which is coupled through lines 4 and 8 to a signal scrambling circuit 5 including a surface acoustic wave (SAW) delay line 6 and an attenuator 10. The SAW device 6 causes the television signal applied thereto to be delayed a predetermined amount in time. A pulse generator 20 receives synchronisation signals on a conductor 22 and produces synchronised, randomly generated, Q and $\overline{Q}$ switching signals on lines 24 and 26, respectively, which are coupled to switches 12 and 14. The synchronisation signals on the line 22 are ordinarily used in the television set to synchronise the sweeping of the electron beam across the television screen from one side to the other with scanning of a line of the picture at the transmission end, followed by retracing of the sweep back to the original side but moved down by the line spacing. The sequence is repeated a number of times, for instance 525 or 625 lines over a time period of one second, depending upon the television standard being used. Thus, the synchronisation signals determine the point in time at which the retrace line is generated and the sweep line is begun again from one side of the television screen to the other. When the synchronisation signal on the line 22 causes the pulse generator 20 to produce a Q pulse on the line 24, the switch 12 gates or couples the delayed output of the SAW device 6 on a line 16 to an output line 28 which is coupled to a summing unit 32. The same signal on the line 2 is, as stated previously, coupled through the conductor 8 to the attenuator 10 which produces an undelayed output on a line 18. However, the switch 14 is off when the Q pulse on the line 24 from pulse generator 20 exists. Thus, only the delayed output of the SAW delay line 6 passes through the switch 12 to the line 28 and to the summing unit 32 during the existence of the Q gating pulse. However, when a subsequent synchronisation pulse arrives on the line 22, the pulse generator 20 produces a $\overline{Q}$ signal on the line 26 which gates the switch 14 on, but the switch 12 is off because the Q pulse does not exist on the line 24. Thus, the undelayed output of the attenuator 10 on the line 18 passes through the switch 14 on a line 30 to the summing unit 32. The output of the summing unit 32 on a line 42 is coupled to a transmitter 44 which transmits the recombined scrambled signals via an antenna 46. The signal is scrambled because the television signal in one sweep line is delayed during the Q pulse with respect to the signal on the next sweep line during the $\overline{Q}$ pulse. Thus, alternate portions or sweep lines of the television signal are delayed with respect to each other.

The delay time through the SAW delay line device 6 differs from the delay time through the attenuator 10 by a significant fraction of the horizontal sweep time. In the United States, for instance, with the NTSC (National Television Standardization Committee) broadcast system, the time from the start of one horizontal line to the start of the next horizontal line is approximately 60 microseconds and the retrace interval is approximately 10 microseconds. In such a system, a typical preferred range for scrambling television signals requires a difference in delay times between that caused by the SAW delay line 6 and that caused by the attenuator of between approximately 3 and 5 microseconds. The SAW delay line device 6 causes that portion (i.e. corresponding to a sweep line) of the television signal 2 passing through the delay line 6 to be considerably delayed from that portion (i.e. corresponding to the next sweep line) passing through the attenuator 10 and thus at the summing unit 32 and the two television signals are differently timed relative to their respective scan lines, so that the picture is scrambled. The attenuator 10 attenuates the signal to compensate for the attenuation caused by the SAW device 6. It is to be noted that while the invention is herein described in detail with respect to the NTSC system, it is also applicable to other systems, e.g. PAL (Phase Alternation Line) and SECAM (derived from French for sequential colour with memory).

As stated earlier, the pulse generator 20 detects the presence of the television horizontal sweep pulse or synchronisation pulse and randomly produces $Q$ and $\overline{Q}$ signals on the lines 24 and 26 which are timed with the synchronisation pulses on the line 22. The pulse generator 20 also drives an interfering signal generator 34 by amplitude modulating (AM) an interfering signal produced in the generator. The modulated interfering signal generator 34 operates on the recombined television signals, through the summing means 32, in a manner well known in the art and described in US-A-4074311. By modulating the interfering signal produced by the generator 34 with the output of the pulse generator 20 which detects the horizontal sweep intervals, the information for synchronising the received signal with the transmitted signal (and which describes the switch times of the delayed and undelayed segments of the signal as it is passed through the SAW delay line 6 and the attenuator 10) is transmitted along with the video programme signal.

In addition, a system is needed to verify tickets being used at the receivers as valid or invalid. Thus, a verification code generator 38 produces a digital code on a line 40, which is summed with the Q switching signal on the line 24 by a summing unit 33 and coupled to the interference generator 34. While the verification code is shown being transmitted on the interference signal carrier, it could alternatively be transmitted on the sound carrier, on the picture carrier (during the retrace interval) or on any other desired carrier. This verification code, as will be explained in detail hereinafter, enables the receiver to verify the validity of an electronic ticket being used to unscramble a signal that is being received. If the ticket is an incorrect or invalid one, the verification code or command causes the ticket to be permanently destroyed, disabled, or deactivated so that it cannot be used then or in the future.

Figure 2 is a schematic representation of a receiving unit for receiving the scrambled signal being transmitted by the transmitter 44 via the antenna 46 in Figure 1. The transmitted television information and other signals are received by an antenna 48 in Figure 2 and are coupled to a receiver 50 which reproduces the scrambled television signal which is coupled to a descrambler 54 by a conductor or connection 52. The descrambler 54 includes an electronic ticket 56 which is plugged into the descrambler and forms part of the descrambling circuit, which will be described in more detail hereinafter. The received signal cannot be descrambled without the ticket. The descrambled signal is produced on a line 58 and is coupled to a video display 60 which may be, for instance, a television set.

As stated earlier, it should be noted that while Figure 1 discloses an antenna transmitting over-the-air signals, the same principles involved in the present invention could be used equally well in a cable system instead of in a radio transmission system including the transmitter 44. In that case, the signals on the line 42 would be coupled to the cable system and then to the display devices, such as television sets, connected thereto.

Thus, the system incorporating the present invention provides intelligible television signals and corresponding video synchronisation signals to authorised video receivers or displays only and comprises the transmitting means 44 for transmitting scrambled signals of at least one video programme, the receiver 50 for receiving the scrambled television signals, and the descrambling unit 54 coupled to the receiver 50 and including the removable electronic ticket 56 for intercepting and at least partially descrambling the television signal from the receiver 50 and for recovering the synchronisation signals. The output of the descrambling unit 54 on the line 58 is coupled to the input of the video display 60 for coupling the recovered synchronisation signals and the descrambled, intelligible television signals to the video display 60.

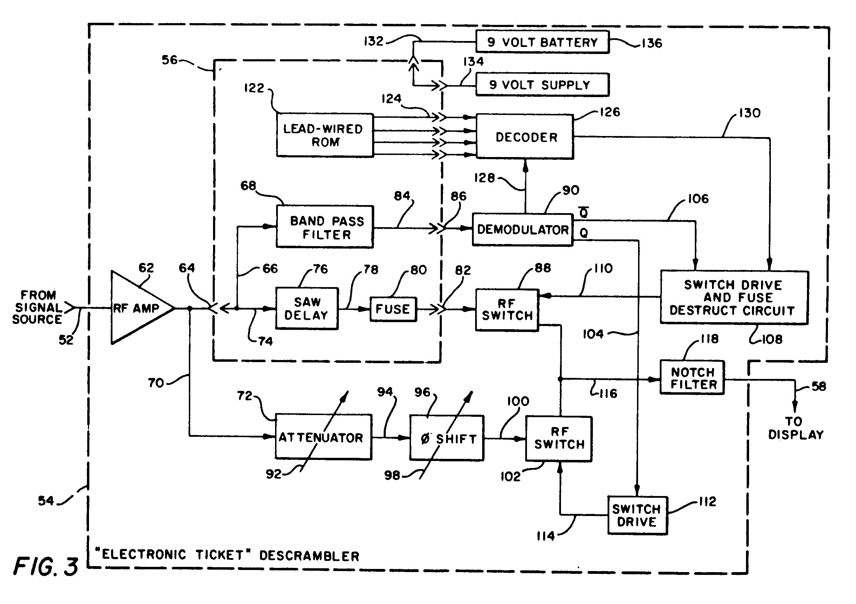

The descrambling unit 54 will now be discussed in relation to Figure 3, wherein the scrambled signal from the receiver 50 on the line 52 (as shown in Figure 2) is coupled to the descrambler 54 and in particular to an RF amplifier 62. The output of the RF amplifier 62 is coupled to the electronic ticket 56 through connections 64. The output of the RF amplifier 62 is also connected through a line 70 to an attenuator 72 in the descrambling unit 54. The electronic ticket 56 has thereon circuitry for at least partially descrambling the received signal and is a unitary package which plugs into or is insertable into the descrambler 54 at junction or contact points 64, 82, 86 and 124. The signal passing through the junction 64 to the electronic ticket 56 is coupled through a line 66 to a band pass filter 68 and through a line 74 to a SAW delay device 76.

The band pass filter 68 recovers the synchronisation signals and the interfering signal which is produced by the generator 34 in Figure 1. It also assists in recovering the verification code signal produced by the generator 38 in Figure 1. The output of the band pass filter 68 on a line 84 is coupled via the connection 86 of the electronic ticket 56 to a demodulator 90 in the descrambling unit 54. The demodulator 90 produces Q and $\overline{Q}$ signals on output lines 104 and 106, respectively. It will be noted that, as compared to the switching process in the transmitter of Figure 1, the Q signal on the line 104 gates or controls, via a switch driver 112, an RF switch 102 for the attenuator 72, whilst the $\overline{Q}$ signal is coupled to a switch driver 108 which drives or controls an RF switch 88 for the SAW device 76. Hence, whereas the delayed signal passing through the SAW delay line 6 of the scrambler unit 5 in Figure 1 is gated by the Q signal, in the descrambler unit 54, the delayed output of the SAW device 76 on the line 78 to the RF switch 88 in Figure 3 is gated by the $\overline{Q}$ signal in Figure 3. The received signal which was not delayed by the attenuator 10 in the transmitter of Figure 1 is now delayed through the SAW device 76 and is gated by the switch 88 to cause it to be aligned with the formerly delayed signal now being gated through the attenuator 72 and the signal is descrambled. Thus, the outputs of the SAW delay line 76 and the attenuator 72 in Figure 3 in the descrambler unit 54 are switched and combined in a manner complimentary to the switching between the original SAW delay line 6 and the attenuator 10 in the transmitter of Figure 1. This means that the total delay time of each horizontal sweep through the entire system remains substantially constant and the scrambled signal is descrambled.

Thus, the electronic ticket 56 is used for at least partially descrambling transmitted television signals and for providing synchronisation signals for use in the video receiver 60. The scrambled signals are received on the first terminal 64 of the ticket 56 and are coupled to the delay line 76, a portion of the descrambling circuit. Since the SAW delay line 76 delays successive alternate portions of the scrambled signal, the signal is partially descrambled and that portion of the descrambled signal and the recovered synchronisation signals from the band pass filter 68 are coupled to the second terminals 82 and 86. These outputs on the second terminals 82 and 86 are coupled to the video receiver 60 by a notch filter 118.

The output of the SAW delay device 76 is coupled on a line 78 directly through a fuse 80 which will be discussed in more detail hereinafter. However, suffice it to say at this point that the fuse 80 is constructed as part of the electronic ticket 56 and is in the video signal path 78 and is used to deactivate or destroy the usability of the electronic ticket 56 if it is not a valid ticket for a particular video programme.

The attenuator 72, which is variable as represented by an arrow 92, is used to balance the system and to allow for variations in insertion loss of the SAW delay line 76. The attenuator comprises a variable resistor and two fixed resistors in a "pi" configuration, the variable resistor being the series leg of the "pi" (one of a number of ways in which the desired result could be obtained and all of which are also well known in the art).

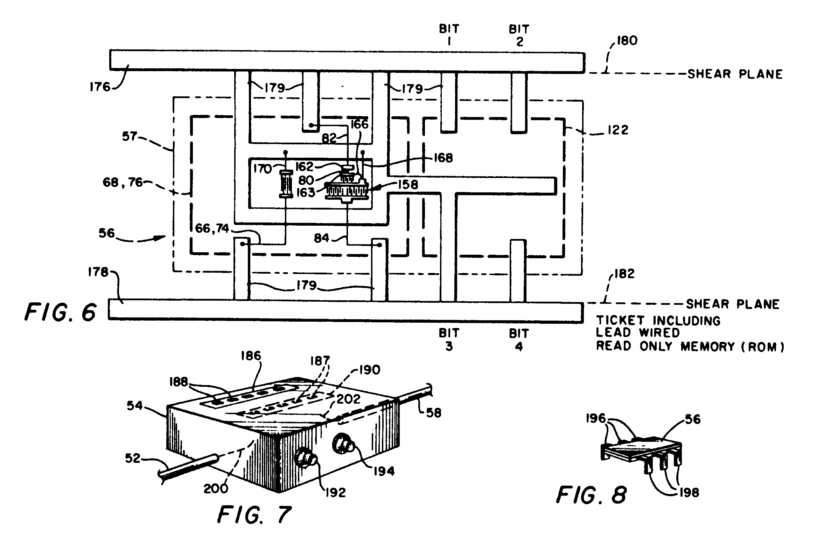

The output of the attenuator 72 on a line 94 is coupled to a phase shifter 96, which is also variable, as represented by an arrow 98. The variable phase shifter 96 is used to match variations in phase shift from one electronic ticket to another, as may be required. It can also be constructed in a number of well known ways, but preferably consists of variable coils and/or capacitors in a ladder or lattice network, in a manner well known in the art. Thus, both amplitude and phase can be adjusted by the user of the descrambler during a period prior to the occurrence of the event or programme. A test pattern is transmitted with a one or two colour constant signal scrambled with a fixed, switch pattern in each frame. The amplitude is adjusted with the attenuator adjustment 92 to eliminate any "venetian blind" effect on the screen and the phase is adjusted by phase adjustment 98 to match colours between bars across the screen. Once adjusted, the controls are then left alone for the remainder of the event. A diagrammatic representation of the set top descrambler is shown in Figure 7 with knobs 192 and 194 representing the adjustment means for the attenuator 72 and the phase shifter 96, respectively.

As stated earlier, the band pass filter 68 on the electronic ticket 56 removes the picture carrier, the sound carrier and video frequency modulation carrier components from the interfering signal frequency, which is also used to carry the timing information or synchronising signals for driving the switches 88 and 102 to reconstruct the video signal. In addition, the band pass filter 68 extracts the ticket coding or verification information and couples it to the demodulator 90 and thence to a decoder 126 on a line 128. The decoder 126 compares the verification code transmitted by the generator 38 in Figure 1 on the interfering carrier signal with the code in a ticket lead frame or hard wired ROM 122 representing a particular ticket, through a third set of terminals or ticket output leads 124. The decoder produces an output signal on a line 130 which destroys unauthorised tickets by activating the ticket destruct electronics in the switch driver and destruct circuitry 108 which drives the RF switch 88, as will be discussed hereinafter.

The outputs of the RF switch 88 and the RF switch 102 are combined on a line 116 and represent the descrambled video signal which is to be used by the video receiver, such as a television set. The combined signal is coupled to the notch filter 118, which removes the interfering signal, as described in U.S. Patent No. 4 074 311.

Thus, the apparatus for descrambling the transmitted, scrambled video programme and providing synchronisation signals for use in a video display comprises the descrambler 54 with a receptacle 186 (Figure 7) for receiving the electronic ticket 56. The descrambler 54 has first terminals 52 for receiving the transmitted scrambled television signal and second terminals 58 for coupling the unscrambled signal to the display 60 for viewing. The electronic ticket 56 is inserted in the receptacle 186 and has the circuitry 68,76 for connection to the descrambler 54 for receiving the scrambled signals. The circuitry 68,76 in the electronic ticket 56 is necessary for the descrambler 54 to be able to descramble the received signal. The output from the SAW delay line circuitry 76 is a partially descrambled signal which is coupled to the second terminals 58 through the notch filter 118 and the RF switch 88 for coupling to the video display 60. The descrambler 54 also includes means such as the decoder 126 which is coupled to the electronic ticket 56 for verifying that an authorised electronic ticket 56 is inserted in the receptacle 186. Furthermore, a circuit including the fuse 80, the RF switch 88 and the switch driver and fuse destruct circuitry 108 is coupled to the decoder 126, the ticket verifying means, and the ticket 56 for deactivating any unauthorised ticket 56 inserted in the receptacle 186.

The band pass filter 68 in the electronic ticket 56 receives and recovers the interfering carrier and its modulation components which contain the ticket verification digital code. The electrical connections 124 on the ticket 56 are formed in a predetermined digitally coded connection pattern on the ticket 56 in conformity with the verification code, so that an authorised ticket can be determined. The decoder 126 is coupled to the connections 124 and also receives and decodes the transmitted verification code from the demodulator 90 on the line 128, compares the digitally coded pattern of connections 124 with the transmitted verification code and produces an output signal on the line 130 if the ticket 56 is unauthorised. Means, such as the fuse 80, in the ticket 56 responds to the output signal on the line 130 and deactivates the unauthorised ticket 56 by melting.

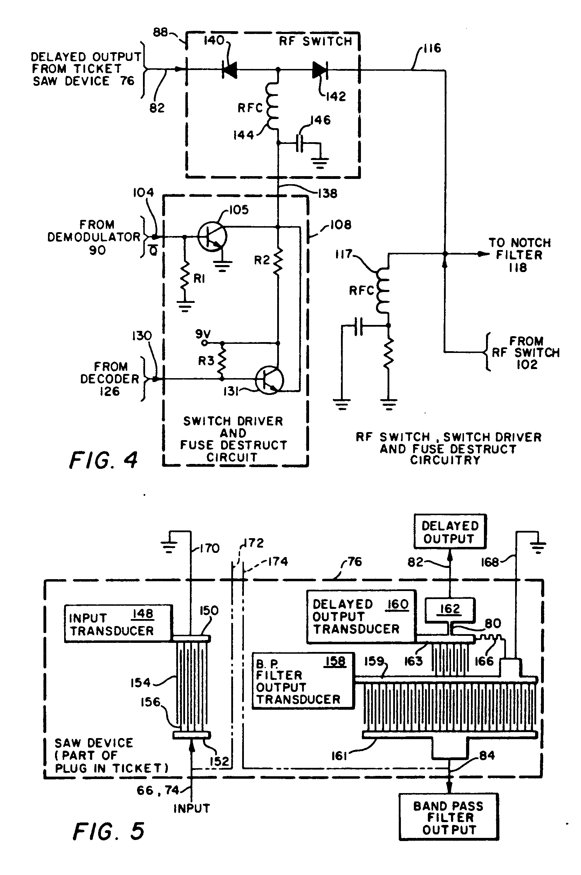

The detailed construction of the RF switch 88 and the switch driver and fuse destruct circuit 108 is shown in Figure 4. The $\overline{Q}$ output from the demodulator 90 on the line 104 is coupled to a transistor 105 in the switch drive portion of the circuit 108, which in turn drives the RF switch 88 with direct current passing through diodes 140 and 142 and an RF choke 144. Thus, the RF switch 88 is gated "on" when the $\overline{Q}$ signal from the demodulator 90 is present on the line 104 and the delayed signal from the SAW device 76 is allowed to pass to the notch filter 118. When the $\overline{Q}$ signal is not present, diodes 140 and 142 are reverse biased and are gated "off" and no delayed signal from the SAW device 76 is allowed to pass to notch filter 118 on the line 116. An RF choke 117 and its associated resistor and capacitor provide a return path for the d.c. current which biases the diode 142.

The current through the diode 140, which is connected directly to the electronic ticket 56 through the RF switch 88, also passes through the SAW device 76 to ground potential to complete the circuit. This will be seen more clearly with respect to Figure 5. The dimensions of the fuse 80 on the SAW device 76 as shown in Figures 5 and 6 are carefully controlled so that the switch 88 drive current does not normally damage the fuse. However, when the decoder chip 126 commands the destruction of a ticket by declamping its output on the line 130 from ground, a resistor R3 in the fuse destruct portion of the circuit 108 drives current into the base of an associated transistor 131, which in turn drives excessive additional current through the diode 140 and the fuse 80, resulting in the destruction of the fuse. Since the fuse 80 is in the television signal path or circuit, once it is destroyed or fused, the electronic ticket 56 is no longer usable.

Also, if the destruct command (verification signal from the transmitter) comprises an invalid code and is transmitted at the end of the broadcast, all valid tickets for that broadcast would be destroyed and rendered unusable for future use. Thus, invalid tickets are rendered unusable at the start of a programme and all the tickets in use at the end of the programme are rendered permanently unusable.

Referring now to Figure 5, which is a diagrammatic representation of the SAW delay device chip 76, it will be seen that the input signal is applied to an input transducer 148 on the lead 66, 74 which is coupled to an input bonding pad 152. The output of the input transducer 148 on a bonding pad 150 is coupled to ground potential through a conductor 170. Each of the pads 150 and 152 has fingers 154 and 156 which are located in an interdigitated manner to form the input transducer 148 in a manner well known in the art.

A band pass filter transducer 158 in Figure 5 is the same unit as designated band pass filter 68 in Figure 3 and may be formed on the same SAW device 76 as the input transducer 148, as shown. The band pass filter transducer 158 has an output developed between the output line 84 connected to a bonding pad 161 and a ground connection 168 which is connected to the bonding pad 159. The bonding connection pads 159 and 161 on the band pass filter transducer 158 also have interdigitated fingers which form the band pass filter in a manner well known in the art.

In addition, the delayed signal output is produced by a transducer 160 which has a bonding connection pad 163 having fingers which are interdigitated with the fingers of the bonding pad 159 to form the delay line, as is well known in the art. The output of the transducer 160 is coupled through the fuse link 80 to an output bonding connection pad 162 which produces the delayed output on the connection 82. Thus, the band pass filter output transducer 158 and the delayed signal output transducer 160 are formed on the same SAW device or chip 76.

It will also be noted in Figure 5 that an electrical connection, including a meandering line 166, exists between the bonding pad 163 of the delayed output transducer 160 and the ground connection 168. This meandering line 166 acts as a high impedance at RF frequencies and is the equivalent of an inductance and resistance in series. However, it has a low resistance to d.c.current flow. Thus, it effectively isolates the bonding pads 159 and 163 at RF frequencies but directly couples them for direct current flow.

As stated earlier with respect to Figure 4, when the demodulator 90 produces a $\overline{Q}$ output indicating that the RF switch 88 is to be gated "on", it drives the RF switch 88, via the transistor 105 in the switch driver 108, to cause the direct current to pass through the diodes 140 and 142 in the RF switch 88 and thus turn the gate "on". The direct current from the diode 140, which is connected directly to the ticket on the line 82, passes through the bonding pad 162 in Figure 5 and the fuse 80, through the meandering line 166 to ground 168. The physical dimensions of the fuse 80 are carefully controlled so that the switch drive current through the transmitter 105 does not normally damage the fuse 80. However, when the decoder chip 126 commands the destruction of a ticket by declamping its output from ground, the resistor R3 in the switch drive and fuse destruction unit 108 shown in Figure 4 drives current into the base of the transistor 131, which in turn drives substantially more current through the diode 140, the line 82, the fuse 80 and the meandering line 166 to ground 168 (Figure 5), resulting in the destruction of the fuse. Since the fuse 80 is a part of the electronic ticket and is directly in the RF path from the output 163 of the delay line transducer 160 to the junction point or bonding pad 162, the ticket 56 is rendered inoperative permanently.

The details of the construction of the electronic ticket 56 including the SAW delay line 76 and the band pass filter 68 formed on a crystal substrate 57 coterminous with the periphery of the ticket 56, and the formation of the read-only memory (ROM) 122 for ticket verification, are disclosed in Figure 6. Thus, the construction of the electronic ticket 56 utilises a lead frame construction that is well known in the art. The electronic ticket is shown in Figure 6 by dotted lines 56 and includes thereon the combined SAW delay line 76 and band pass filter 68 as well as the ROM 122. The SAW device including the band pass filter 68 and the delay line 76 include leads 66, 74 and the ground lead 170 for receiving the scrambled input from the RF amplifier 62 in Figure 3. Also on the SAW device are the band pass filter output connection 84, the ground connection 168 and the SAW delay line device output connection 82. The fuse 80 is shown located between the bonding pads 162 and 163, and the meandering line 166 is located between the bonding pads 159 and 163. These connections are all coupled to the leads from frames 176 and 178.

In addition, the ROM 122 consists of four leads designated as bit 1, bit 2, bit 3, and bit 4 extending from the lead frames 176, 178 to the electronic ticket 56. It will be noted that only bit 3 is actually connected to the ground line connection 168. Thus, the code that would be detected by the decoder 126 in Figure 3 is 0100 in which bit 4 is the first 0, bit 3 is the 1, bit 2 is a 0 and bit 1 is a 0. It will be noted that this construction provides sixteen different digital combinations which can be formed by connecting various ones of the four bits to the ground plane or connection 168. Thus, those leads attached to the ground bus 168 are interpreted by the decoder circuitry 126 as a 1 while those not so connected are interpreted as a 0. The decoder chip 126 is of the same type as used in today's security and garage door opener receivers and is well known in the art. Thus, the arrangement of the leads or connections must be physically configured in conformance with the verification code to represent a valid ticket. A particular ticket can then be required in order to view a particular event. Invalid tickets will be destroyed.

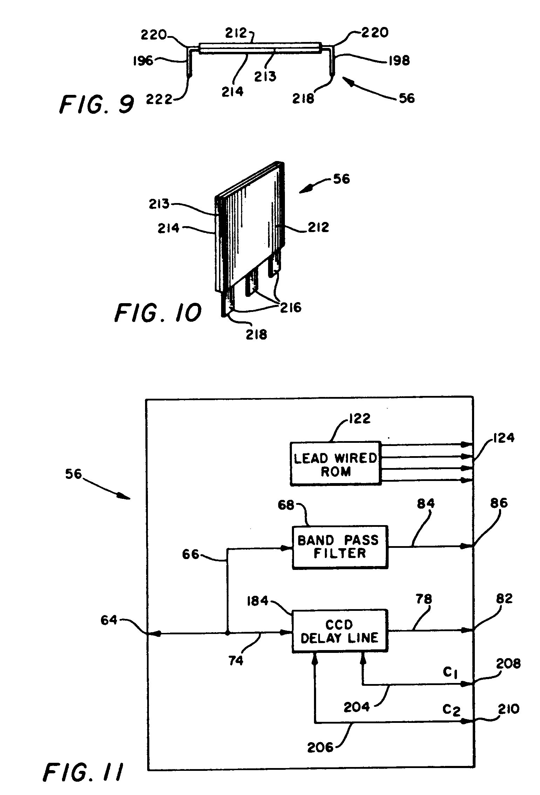

As stated earlier, the lead frame construction shown in Figure 6 is also well known in the art. However, in packaging a SAW device, such as the SAW device 76, in a lead frame, care must be taken to protect the surface of the crystal 57 (on which the connection pads are bonded) from contact by the plastic encapsulating the device. A two piece plastic case indicated by dashed lines 56 representing the electronic ticket encapsulates the descrambling circuit (delay line 76 and band pass filter 68), the ROM and at least a portion of the electrically conductive leads 179 on the lead frames 176,178. The two-piece plastic case is welded along coterminous edges and once the welding is complete, the lead frames are broken or sheared off along lines 180 and 182, designated as shear planes in Figure 6. The welding of the plastic case can be done in several ways, possibly, for example, with ultrasound. After the lead frames 176, 178 are sheared off, the remaining portion of the leads 179 extending outwardly from the encapsulated electronic ticket 56 are bent over at right angles and the electronic ticket is an enclosed unitary package which may be used as a removable plug-in unit. Figure 8 and Figure 9 disclose this concept. For this electronic ticket 56, it may alternatively be preferable to bring all of the leads out on one side, to facilitate easy plug-in operation, as shown in Figure 10. This is represented in Figure 5 by dotted lines 172 and 174 which suggest that the input leads 66, 74 to the SAW device could extend out on the other side of the SAW chip 76 along the line 172, while the output lead 84 from the band pass filter circuit 158 could also be extended along the line 174 to exit the SAW chip 76 on the same side as the other leads. Thus, all connections would be on the same side in that case. As indicated earlier, this concept is also illustrated in Figure 10.

This technique for packaging the SAW device 76 uniquely provides security against tampering. Once the lead frames 176 and 178 as shown in Figure 6 have been removed, removing the plastic housing or encapsulation covering the ticket 56 leaves the active or nongrounded leads (66, 74, 82, 84) supported only by the bond wires going to the SAW pads. These wires are typically 0.013mm to 0.025mm (.0005 to .001 of an inch) in diameter and cannot support the weight of the lead, much less the torque or tension likely to be applied to remove the plastic. Thus, these connections to the external terminals would be destroyed. Even if a person could successfully open the plastic package and determine how the unit is constructed, the unit could not be easily duplicated because the thin metal on the surface of the crystal cannot be easily wired. A wire bonding machine such as used for semiconductors is required, and is not commonly available to the public. Thus, the descrambling circuit formed in the unitary package as indicated above will be physically destroyed if an attempt is made to open the unitary package, or if it is tampered with.

Furthermore, a 9 volt d.c. battery power supply 136 as shown in Figure 3 is required in the descrambler unit 54 to power the descrambler unit 54 to power the descrambler unit and to activate the fuse destruct circuit as seen in the switch drive and fuse destruct circuit 108 in Figure 4. That 9 volt battery 136 may be coupled from the descrambler 54 on a lead 132 through a contact into the ticket 56 as shown in Figure 3, thus conserving battery power when no ticket is inserted. Alternatively, a 9 volt d.c. power supply which is obtained from an external source 134 may be plugged into the descrambling unit 54 so that the battery is eliminated. Either source can, of course, be used.

Figure 7 is a diagrammatic representation of a descrambler unit 54. The incoming scrambled television signals on the cable 52 are coupled internally to the circuits shown in Figure 3 as shown schematically by a lead or connection 200. The output from the circuit shown in Figure 3 is coupled through a connection 202 in Figure 7 to the conductor 58 for transmission to the video receiver 60 in Figure 2. The descrambler 54 includes the receptacle 186 having connections 188 therein for the insertion of a ticket such as shown in Figure 10 wherein all of the connections extend from one side of the ticket only. In the event that a ticket having leads extending from both sides, such as that shown in Figure 8 or Figure 9, is used, an additional receptacle 190 (shown in dashed lines) having connections 187 therein is formed in the descrambler 54, thus allowing the dual-inline package type electronic ticket to be utilised. The controls 192 and 194, as explained earlier, allow the owner of the descrambling unit to adjust his unit for both attenuation and phase shift prior to the beginning of any programme.

The invention therefore also relates to a method of descrambling television and synchronisation signals for use in a video display comprising the steps of providing partial descrambling circuitry having the terminals 52 and 200 for receiving the scrambled video signal and for coupling to the video display 60, coupling an electronic ticket 56 containing the rest of the descrambling circuitry 68 and 76 to the partial descrambling circuitry for forming a complete descrambling unit which descrambles the received video signal and couples the descrambled video signal to the terminals 58 and 202 for feeding to the video display.

Figure 8 discloses a diagrammatic representation of an electronic ticket 56 having the SAW devices thereon and having external leads 196 and 198 extending outwardly and downwardly therefrom to form a dual inline pin plug-in module.

An end view of the dual inline electronic ticket of Figure 8 is shown in Figure 9. The electronic ticket 56 is encapsulated by two plastic halves 212 and 214 which are bonded together, for example by ultrasound or other well known means, along their adjoining edges 213. The leads 196 and 198 extend from both sides of the electronic ticket 56 and are bent downwardly at right angles at points 220. The ends 218 and 222 of the leads 198 and 196 are the points where the lead frames were broken off as described earlier with reference to Figure 6.

In Figure 10 the electronic ticket 56 is shown with leads 216 extending from one side thereof only. Again, the ticket has plastic halves 212 and 214 which are bonded together at their common edges 213. Also, the ends of the leads 216 at 218 are the points where the lead frames are broken off as described previously with reference to Figure 6.

Thus, the invention also relates to a method of constructing a low cost, mass producible electronic ticket 56 for descrambling transmitted video programme and synchronisation signals for use in a video receiver 60 comprising the steps of forming a portion 68, 76 of a descrambling circuit on a substrate 57, forming a lead frame 176, 178 having electrically conductive terminals 179 thereon, electrically attaching the descrambling circuit 68, 76 to predetermined ones of the conductive terminals 179 on the lead frame 176, 178 and encapsulating the descrambling circuit 68, 76 and at least a portion of the electrically conductive terminals 179 on the lead frame 176, 178 to form a unitary package.

Figure 11 is a diagrammatic representation of an alternative form of electronic ticket 56 using a charge coupled device (CCD). CCDs operate at a lower frequency than SAW devices and will require the use of demodulators to translate the received frequency into the frequency range of the CCD, as is well known by those who are skilled in the art. In this case, the SAW device 76 shown in Figure 3 is replaced with a charge coupled delay line 184 which feeds an output over a line 78 to the connection 82. As is well known in the art, the delay time of a charge coupled device can be changed simply by changing the clock frequency applied to the charge coupled device. In this case, the clock frequency on a line 204 from a connection 208 differs from the clock signal on a line 206 from a connection 210. These clock signals can be switched by the output signals developed from the band pass filter 68 on the line 84 to the demodulator 90, as explained earlier in relation to Figure 3. Thus, as shown in Figure 3, the demodulator 90 produces the Q and $\overline{Q}$ signals on the lines 104 and 106, respectively, which would be used to switch the clock signals from one frequency to the other and to apply them alternately to the charge coupled device 184 over the lines 204 and 206. In all other respects, the electronic ticket 56 as shown in Figure 11 would operate as disclosed earlier. No attenuator or phase shifter will be required.

It is apparent that the hard-wired ROM 122 as shown in Figures 6 and 11 could be constructed in any manner well known in the art instead of by the lead frames as shown in Figure 6. In addition, the band pass filter 68 would not have to be a SAW device but could be constructed in any other well known manner. It will also be understood by those skilled in the art that the function of the CCD can be provided by means of an A-D converter, digital shift registers and D-A converters connected in tandem.

Thus, the present invention provides a novel system, method and apparatus for using a lost cost, mass producible electronic ticket. Particular tickets are provided for particular shows, to prevent the television signal from being acceptably received by an unauthorised television receiver while maintaining the television signal recoverable by an authorised receiver utilising a valid ticket. Such tickets can easily be sold in supermarkets, drug stores, convenience stores and the like.

## Claims

1. Apparatus for supplying intelligible television signals and corresponding synchronisation signals to authorised receivers only, comprising transmitting means (44,46) for transmitting scrambled signals of a video programme; means (28-32,42) coupled to the scrambling means and the transmitting means for coupling synchronisation signals and the scrambled signals to the transmitter (44) for transmission; a receiver (48,50) for receiving the signals; a descrambling unit (54,56) coupled to the receiver having means (68,90) for recovering the synchronisation signals, intercepting and descrambling the scrambled signals, and having an output (58) for coupling the descrambled intelligible television signals to a video receiver (60); a removable electronic ticket (56); a delay line (76) for receiving the scrambled signals and producing an output; and, means (88,102,112) coupled to the delay line (76) and the synchronisation signal recovering means for descrambling the signals by using the recovered synchronisation signals to cause the delay line to delay alternate portions of the television signals complementary to those portions delayed in the transmitter, whereby the video picture produced by the descrambled signal is intelligible; characterised in that:

   the transmitting means includes means (5) for scrambling the television signal; and,

   the electronic ticket (56) has descrambling circuitry including the delay line (76).

2. Apparatus according to claim 1, wherein the scrambling means (5) comprises a surface acoustic wave (SAW) delay line device (6) for receiving the video programme signals; and further comprising means (12,14) coupled to the SAW delay line device (6) for using the synchronisation signals to cause alternate portions of the television signals to be delayed with respect to each other, whereby the video picture produced by the television signals is scrambled and unintelligible.

3. Apparatus according to claim 1 or claim 2, comprising means (38) for transmitting a signal to the receiver for verifying the validity of the ticket (56) for a particular video programme; and means (108,80) in the ticket coupled to the receiver and responsive to the verifying signal for deactivating the operability of the ticket if the ticket is not verified as valid.

4. Apparatus according to claim 3, wherein the deactivating signal responsive means comprises means (90) for receiving the verifying signal; a ROM (read-only memory) (122) forming part of the ticket (56), the ROM providing a coded output representing a ticket for descrambling the particular television signals; means (126) for comparing the received verifying signal with the ROM coded output and for producing an output signal if no comparison is found; and means (80) coupled to the surface acoustic wave delay line device for deactivating the ticket if the output signal is produced.

5. Apparatus according to claim 4, wherein the means for deactivating the ticket (56) comprises a verification code transmitted with the scrambled television signal; electrical connections (179) on the ticket physically configured in conformance with the verification code; means (126) coupled to the ticket for electronically comparing the verification code with the connection configuration and producing a deactivation signal if the connections do not conform to the verification code; and means (108) for receiving the deactivation signal and for destroying at least part (80) of the electronic ticket descrambling circuitry to disable the ticket permanently.

6. Apparatus according to claim 5, wherein the destructible part of the electronic ticket descrambling circuitry is a fusible link (80) which is destroyed by the deactivation signal.

7. Apparatus according to any preceding claim, comprising means for permanently destroying each valid electronic ticket at the end of the video programme descrambled by means of the ticket.

8. Apparatus according to claim 7, wherein the ticket permanent destruction means comprises means (38) for transmitting a command destruct signal to be received by each electronic ticket being used to descramble the scrambled signals; and means (108) for receiving the command destruct signal and for producing an output signal for permanently destroying a portion (80) of the ticket descrambling circuit whereby the ticket is not reusable.

9. Apparatus for descrambling transmitted television signals, comprising descrambling means (54) having an input (52) for receiving the television signals and an output (58) for coupling the television signals to a video receiver (60); an electronic ticket (56) removably coupled to the descrambling means, the descrambled signals being fed via the output (58) to the video receiver for viewing; and, a delay line (76); characterised in that:
the descrambling means (54) is for descrambling scrambled television signals, the scrambled television signals being descrambled by descrambling means on the ticket and the descrambling unit, in combination; and in that the electronic ticket (56) comprises descrambling circuitry including the delay line (76) for receiving the scrambled signals and producing an output.

10. Apparatus according to any one of claims 1 to 9, wherein the deactivating means comprises a fusible link (80) in the ticket descrambling means; a current source (136); and means (88) for coupling the current source to the fusible link to destroy the link when the output of the verifying means (126) indicates an unauthorised ticket.

11. Apparatus according to claim 10, comprising a ROM (122) formed on the ticket (56) for forming the ticket verifying means.

12. Apparatus according to any preceding claim, wherein the descrambling means on the ticket comprises a surface acoustic wave device (76).

13. Apparatus according to any preceding claim, comprising means (68) on the ticket (56) for recovering the synchronisation signals.

14. Apparatus according to any preceding claim, comprising a surface acoustic wave device (68) forming a band pass filter as part of the electronic ticket for providing circuitry for recovering the synchronisation signals.

15. Apparatus according to claim 14, wherein the synchronising signal recovery means (68) is formed from a second surface acoustic wave device.

16. Apparatus according to claim 15, wherein the ticket descrambling means (76) and the synchronising signal recovery means (68) are both formed on a common surface acoustic wave device.

17. A method of selectively supplying intelligible television signals to a video receiver (60), characterised by the steps of scrambling (5) television signals for transmission; receiving (48,50) the transmitted, scrambled television signals; and providing an electronic ticket (56) for the selected video receiver for receiving and descrambling a predetermined scrambled television signal and for coupling the descrambled signal to the receiver as intelligible signal information said ticket comprising descrambling circuitry including a delay line (76) for receiving the scrambled signals and producing at least a partially descrambled television signal at its output.

18. A method according to claim 17, wherein predetermined electrical connections (179) are formed on the electronic ticket (56)in conformance with a verification code; and at least a portion (80) of the electronic ticket descrambling circuitry is deactivated if the connections on the electronic ticket do not conform to the verification code.

19. An electronic ticket for descrambling transmitted television and synchronisation signals for use in a video receiver, comprising first terminals (196) for receiving the television signals; and, second terminals (198) for coupling the partially descrambled output television signal to the video receiver; characterised by:
   descrambling circuitry including a delay line (76) having its input coupled to the first terminals for producing at least a partially descrambled television signal at its output;and means (212,214) for enclosing portions of the first and second terminals and the delay line (76) in a unitary package whereby the ticket can be used as a removable plug-in unit.

20. An electronic ticket according to claim 19, comprising means for forming the enclosing means (212,214) about the descrambling circuit such that if attempt is made to open the unitary package, the descrambling circuitry physically destroyed.

21. An electronic ticket according to claim 20, wherein the physical destruction of the descrambling circuitry is caused by destruction of connections (66,74,82,84) to the terminals (196,198) upon attempted opening of the unitary package.

22. An electronic ticket according to any one of claims 19 to 21, comprising means (122) for verifying the validity of a ticket (56) for use in descrambling a predetermined video programme signal; and means (80) responsive to the verifying means for destroying the usability of the ticket if used to descramble a television signal other than said predetermined signal.

23. An electronic ticket according to claim 22, comprising means (179) for forming a coded set of third terminals (BIT1-BIT4) on the ticket (56) to present a code to be verified as representing a valid ticket for a particular predetermined video programme; and means (80) for destroying the usability of the ticket if the ticket is not verified as valid.

24. An electronic ticket according to claim 23, comprising a fusible link (80) in the electronic ticket necessary to the operation thereof; and means (82) to which power is supplied to destroy the link if the electronic ticket is not verified as valid.

25. An electronic ticket according to any one of claims 19 to 24, comprising a surface acoustic wave device (76) on the ticket for forming the descrambling circuitry.

26. An electronic ticket according to claim 25, comprising a band pass filter (68) on the ticket for recovering the synchronisation signals.

27. An electronic ticket according to claim 26, comprising a surface acoustic wave device on the ticket for forming the band pass filter (68).

28. An electronic ticket according to claim 27, wherein the band pass filter (68) and the descrambling circuitry (76) are both formed on the same surface acoustic wave device.

29. An electronic ticket according to claim 23, comprising a ROM circuit (122) on the ticket coupled to the third terminals (BIT2-BIT4) for forming the code to be verified.

## Revendications

1. Appareil pour délivrer des signaux de télévision intelligibles et des signaux de synchronisation correspondants uniquement à des récepteurs autorisés, comprenant des moyens d'émission (44, 46) pour émettre des signaux brouillés d'un programme vidéo ; des moyens (28 à 32, 42) couplés aux moyens de brouillage et aux moyens d'émission pour coupler les signaux de synchronisation et les signaux brouillés à l'émetteur (44) pour l'émission ; un récepteur (48, 50) pour recevoir les signaux ; une unité de désembrouillage (54, 56) couplée au récepteur ayant des moyens (68, 90) pour récupérer les signaux de synchronisation, pour intercepter et désembrouiller les signaux brouillés, et ayant une sortie (58) pour coupler les signaux de télévision intelligibles désembrouillés à un récepteur vidéo (60) ; une fiche électronique amovible (56) ; une ligne à retard (76) pour recevoir les signaux brouillés et produire une sortie ; et des moyens (88, 102, 112) couplés à la ligne à retard (76) et aux moyens de récupération de signal de synchronisation pour désembrouiller les signaux en utilisant les signaux de synchronisation récupérés afin de faire retarder par la ligne à retard des parties alternées des signaux de télévision complémentaires aux parties retardées dans l'émetteur, grâce à quoi l'image vidéo produite par le signal désembrouillé est intelligible ; **caractérisé** en ce que :

les moyens d'émission comportent des moyens (5) pour brouiller le signal de télévision ; et

la fiche électronique (56) possède des circuits de désembrouillage comprenant la ligne à retard (76).

2. Appareil selon la revendication 1, dans lequel les moyens de brouillage (5) comportent un dispositif (6) à ligne à retard à onde acoustique de surface pour recevoir les signaux de programme vidéo ; et comportant de plus des moyens (12, 14) couplés au dispositif (6) à ligne à retard à onde acoustique de surface pour utiliser les signaux de synchronisation afin de retarder les parties alternées des signaux de télévision les unes par rapport aux autres, grâce à quoi l'image vidéo produite par les signaux de télévision est brouillée et inintelligible.

3. Appareil selon la revendication 1 ou la revendication 2, comportant des moyens (38) pour émettre un signal vers le récepteur afin de vérifier la validité de la fiche (56) pour un programme vidéo particulier ; et des moyens (108, 80) dans la fiche couplée au récepteur et réagissant au signal de vérification en désactivant la faculté d'utilisation de la fiche si la fiche n'est pas vérifiée comme étant valide.

4. Appareil selon la revendication 3, dans lequel les moyens réagissant au signal de désactivation comportent des moyens (90) pour recevoir le signal de vérification ; une mémoire morte (122) faisant partie de la fiche (56), la mémoire morte délivrant une sortie codée représentant une fiche pour désembrouiller les signaux de télévision particuliers ; des moyens (126) pour comparer le signal de vérification reçu avec la sortie codée de la mémoire morte et pour produire un signal de sortie si l'on ne trouve aucune comparaison ; et des moyens (80) couplés au dispositif à ligne à retard à onde acoustique de surface pour désactiver la fiche si le signal de sortie est produit.

5. Appareil selon la revendication 4, dans lequel les moyens pour désactiver la fiche (56) comportent un code de vérification émis avec le signal de télévision brouillé ; des connexions électriques (179) sur la fiche physiquement configurées en conformité avec le code de vérification ; des moyens (126) couplés à la fiche pour comparer électroniquement le code de vérification avec la configuration de connexion et pour produire un signal de désactivation si les connexions ne sont pas conformes au code de vérification ; et des moyens (108) pour recevoir le signal de désactivation et pour détruire au moins une partie (80) des circuits de désembrouillage de la fiche électronique pour invalider la fiche de façon permanente.

6. Appareil selon la revendication 5, dans lequel la partie destructible des circuits de désembrouillage de la fiche électronique est une liaison fusible (80) qui est détruite par le signal de désactivation.

7. Appareil selon l'une quelconque des revendications précédentes, comportant des moyens pour détruire de façon permanente chaque fiche électronique valide à la fin du programme vidéo désembrouillé au moyen de la fiche.

8. Appareil selon la revendication 7, dans lequel les moyens de destruction permanente de la fiche comportent des moyens (38) pour émettre un signal de destruction de commande devant être reçu par chaque fiche électronique utilisée pour désembrouiller les signaux brouillés ; et des moyens (108) pour recevoir le signal de destruction de commande et pour produire un signal de sortie pour détruire de façon permanente une partie (80) du circuit de désembrouillage de la fiche, grâce à quoi la fiche n'est pas réutilisable.

9. Appareil pour désembrouiller des signaux de télévision émis, comportant des moyens de désembrouillage (54) ayant une entrée (52) pour recevoir les signaux de télévision et une sortie (58) pour coupler les signaux de télévision à un récepteur vidéo (60) ; une fiche électronique (56) couplée de façon amovible aux moyens de désembrouillage, les signaux désembrouillés étant délivrés par l'intermédiaire de la sortie (58) au récepteur vidéo de façon à être visualisés ; et une ligne à retard (76) ; **caractérisé** en ce que :

les moyens de désembrouillage (54) servent à désembrouiller les signaux de télévision brouillés, lesdits signaux de télévision brouillés étant désembrouillés par des moyens de désembrouillage sur la fiche et l'unité de désembrouillage, en combinaison ; et en ce que la fiche électronique (56) comporte les circuits de désembrouillage comprenant la ligne à retard (76) pour recevoir les signaux brouillés et pour produire une sortie.

10. Appareil selon l'une quelconque des revendications 1 à 9, dans lequel des moyens de désactivation comportent une liaison fusible (80) dans les moyens de désembrouillage de la fiche ; une source de courant (136) ; et des moyens (88) pour coupler la source de courant à la liaison fusible afin de détruire la liaison lorsque la sortie des moyens de vérification (126) indique une fiche non-autorisée.

11. Appareil selon la revendication 10, comportant une mémoire morte (122) formée sur la fiche (56) pour former les moyens de vérification de la fiche.

12. Appareil selon l'une quelconque des revendications précédentes, dans lequel les moyens de désembrouillage sur la fiche comportent un dispositif (76) à onde acoustique de surface.

13. Appareil selon l'une quelconque des revendications précédentes, comportant des moyens (68) sur la fiche (56) pour récupérer les signaux de synchronisation.

14. Appareil selon l'une quelconque des revendications précédentes, comportant un dispositif (68) à onde acoustique de surface, formant un filtre passe-bande faisant partie de la fiche électronique pour procurer des circuits permettant de récupérer les signaux de synchronisation.

15. Appareil selon la revendication 14, dans lequel les moyens (68) de récupération du signal de synchronisation sont formés à partir d'un deuxième dispositif à onde acoustique de surface.

16. Appareil selon la revendication 15, dans lequel les moyens (76) de désembrouillage de la fiche et les moyens (68) de récupération de signal de synchronisation sont tous deux formés sur un dispositif à onde acoustique de surface commun.

17. Procédé pour délivrer sélectivement les signaux de télévision intelligibles à un récepteur vidéo (60), **caractérisé** par les étapes de brouillage (5) de signaux de télévision pour l'émission ; de réception (48, 50) des signaux de télévision brouillés émis ; et de fourniture d'une fiche électronique (56) pour le récepteur vidéo sélectionné afin de recevoir et de désembrouiller un signal de télévision brouillé prédéterminé et de coupler le signal désembrouillé au récepteur sous la forme d'une information de signal intelligible, ladite fiche comportant les circuits de désembrouillage comprenant une ligne à retard (76) pour recevoir les signaux brouillés et pour produire au moins un signal de télévision partiellement désembrouillé sur sa sortie.

18. Procédé selon la revendication 17, dans lequel les connexions électriques à déterminer (179) sont formées sur la fiche électronique (56) en conformité avec un code de vérification ; et au moins une partie (80) des circuits de désembrouillage de la fiche électronique est désactivée si les connexions sur la fiche électronique ne sont pas conformes au code de vérification.

19. Fiche électronique pour désembrouiller des signaux de télévision et de synchronisation émis et devant être utilisés dans un récepteur vidéo, comprenant des premières bornes (196) pour recevoir les signaux de télévision ; et des deuxièmes bornes (198) pour coupler le signal de télévision aux sorties partiellement désembrouillées au récepteur vidéo ; **caractérisé** par :

des circuits de désembrouillage comprenant une ligne à retard (76) ayant son entrée couplée aux premières bornes pour produire au moins un signal de télévision partiellement désembrouillé sur sa sortie ; et des moyens (212, 214) pour renfermer des parties des premières et deuxièmes bornes et de la ligne à retard (76) dans un boîtier d'une seule pièce, grâce à quoi la fiche peut être utilisée sous la forme d'une unité enfichable amovible.

20. Fiche électronique selon la revendication 19, comportant des moyens pour former les moyens d'enfermement (212, 214) autour du circuit de désembrouillage de telle sorte que si l'on essaie d'ouvrir le boîtier d'une seule pièce, les circuits de désembrouillage soient physiquement détruits.

21. Fiche électronique selon la revendication 20, dans laquelle la destruction physique des circuits de désembrouillage est provoquée par la destruction des connexions (66, 74, 82, 84) aux bornes (196, 198) lorsque l'on essaie d'ouvrir le boîtier d'une seule pièce.

22. Fiche électronique selon l'une quelconque des revendications 19 à 21, comportant des moyens (122) pour vérifier la validité d'une fiche (56) devant être utilisée pour désembrouiller un signal de programme vidéo prédéterminé ; et des moyens (80) réagissant aux moyens de vérification en détruisant la capacité d'utilisation de la fiche si on l'utilise pour désembrouiller un signal de télévision autre que ledit signal prédéterminé.

23. Fiche électronique selon la revendication 22, comportant des moyens (179) pour former un jeu codé de troisièmes bornes (BIT1 à BIT4) sur la fiche (56) de façon à présenter un code devant être vérifié comme représentant une fiche valide pour un programme vidéo prédéterminé particulier ; et des moyens (80) pour détruire la capacité d'utilisation de la fiche si la fiche n'est pas vérifiée comme étant valide.

24. Fiche électronique selon la revendication 23, comportant une liaison fusible (80) dans la fiche électronique, nécessaire au fonctionnement de celle-ci ; et des moyens (82) auxquels est délivrée de l'énergie afin de détruire la liaison si la fiche électronique n'est pas vérifiée comme étant valide.

25. Fiche électronique selon l'une quelconque des revendications 19 à 24, comportant un dispositif (76) à onde acoustique de surface sur la fiche pour former les circuits de désembrouillage.

26. Fiche électronique selon la revendication 25, comportant un filtre passe-bande (68) sur la fiche pour récupérer des signaux de synchronisation.

27. Fiche électronique selon la revendication 26, comportant un dispositif à onde acoustique de surface sur la fiche pour former le filtre passe-bande (68).

28. Fiche électronique selon la revendication 27, dans laquelle le filtre passe-bande (68) et les circuits de désembrouillage (76) sont tous deux formés sur le même dispositif à onde acoustique de surface.

29. Fiche électronique selon la revendication 23, comportant un circuit de mémoire morte (122) sur la fiche, couplé aux troisième bornes (BIT2 à BIT4), pour former le code à vérifier.

**Patentansprüche**

1. Gerät zur Übermittlung von verständlichen Fernsehsignalen und entsprechenden Synchronisationssignalen ausschließlich an autorisierte Empfänger mit Übertragungsmitteln (44,46) zur Übertragung von verschleierten Signalen eines Videoprogramms; Mitteln (28 bis 32,42), die an die Verschleierungsmittel und die Übertragungsmittel angeschlossen sind, um Synchronisationssignale und die verschleierten Signale an den Sender (44) für die Übertragung anzukoppeln; einem Empfänger (48,50) für den Empfang der Signale; einer Entschleierungseinheit (54,56), die an den Empfänger angeschlossen ist und Mittel (68,90) zur Wiedergewinnung der Synchronisationssignale, Abfangen und Entschleiern der verschleierten Signale aufweist und einen Ausgang (58) zur Ankopplung der entschleierten, verständlichen Fernsehsignale an einen Video-Empfänger (60) hat; einem entfernbaren elektronischen Ticket (56); einer Verzögerungsleitung (76) für den Empfang der verschleierten Signale und zum Hervorbringen eines Ausgangs; und Mitteln (88,102,112), die an die Verzögerungsleitung (76) und die Mittel zur Wiedergewinnung des Synchronisationssignales zur Entschleierung der Signale angeschlossen sind, wobei die wiedergewonnenen Synchronisationssignale dazu benutzt werden, um die Verzögerungsleitung zu veranlassen, abwechselnde Abschnitte der Fernsehsignale komplementär zu den Abschnitten, die in dem Sender verzögert werden, zu verzögern, wodurch das Videobild, das durch das entschleierte Signal produziert wird, verständlich ist; dadurch **gekennzeichnet, daß:**

die Übertragungsmittel Mittel (5) zur Verschleierung des Fernsehsignals einschließen; und

das elektronische Ticket (56) einen Entschleierungsschaltkreis aufweist, der den Verzögerungsschaltkreis aufweist, der die Verzögerungsleitung (76) enthält.

2.  Gerät nach Anspruch 1, bei dem die Verschleierungsmittel (5) ein Verzögerungsleitungsgerät (6) mit einer Oberflächenakustikwelle (SAW) zum Empfang der Videoprogrammsignale umfaßt; und weiterhin Mittel (12,14) umfaßt, die an dem SAW-Verzögerungsleitungsgerät (6) zur Verwendung der Synchronisationssignale angeschlossen sind, um zu bewirken, daß abwechselnde Abschnitte des Fernsehsignals gegeneinander verzögert sind, wodurch das durch die Fernsehsignale hervorgebrachte Videobild verschleiert und unverständlich wird.

3.  Gerät nach Anspruch 1 oder 2, das Mittel (38) zum Übertragen eines Signals zu dem Empfänger zur Überprüfung der Gültigkeit des Tickets (56) für ein bestimmtes Videoprogramm sowie Mittel (108,80) in dem Ticket umfaßt, die an dem Empfänger angeschlossen sind und auf das Überprüfungssignal zur Deaktivierung der Betriebsfähigkeit des Tickets reagieren, wenn sich das Ticket als nicht gültig erweist.

4.  Gerät nach Anspruch 3, bei dem die Mittel, die auf das Deaktivierungssignal reagieren, Mittel (90) zum Empfang des Überprüfungssignales; ein ROM (read only memory) (122), das Bestandteil des Tickets (56) ist und einen kodierten Ausgang bereitstellt, der ein Ticket für die Entschleierung der bestimmten Fernsehsignale repräsentiert; Mittel (126) zum Vergleichen des empfangenden Überprüfungssignales mit dem durch das ROM kodierte Ausgangssignal und zur Hervorbringung eines Ausgangssignales, wenn kein Vergleich gefunden wird; sowie Mittel (80) umfassen, die an das Verzögerungsleitungsgerät mit Oberflächenakustikwelle zur Deaktivierung des Tickets angeschlossen sind, wenn das Ausgangssignal hervorgebracht wird.

5.  Gerät nach Anspruch 4, bei dem die Mittel zur Deaktivierung des Tickets (56) einen Überprüfungscode, der mit dem verschleierten Fernsehsignal übermittelt wird; elektrische Verbindungen (179) an dem Ticket, die physikalisch im Einklang mit dem Überprüfungscode angeordnet sind; Mittel (126), die zum elektronischen Vergleich des Überprüfungscodes mit der Anschlußkonfiguration mit dem Ticket verbunden sind und ein Deaktivierungssignal erzeugen, wenn die Verbindungen nicht mit dem Überprüfungscode übereinstimmen; und Mittel (108) zum Empfang des Deaktivierungssignals und zur Zerstörung mindestens eines Teils (80) des Entschleierungsschaltkreises des elektronischen Tickets umfassen, um das Tikket dauernd unbrauchbar zu machen.

6.  Gerät nach Anspruch 5, bei dem der zerstörbare Teil des Entschleierungsschaltkreises des elektronischen Tickets eine schmelzbare Verbindung (80) ist, die durch das Deaktivierungssignal zerstört wird.

7.  Gerät nach einem der vorhergehenden Ansprüche, das Mittel zur dauernden Zerstörung jedes gültigen elektronischen Tickets am Ende des Videoprogramms umfaßt, das mit Hilfe des Tickets entschleiert wird.

8.  Gerät nach Anspruch 7, bei dem die Mittel zur dauernden Zerstörung des Tickets Mittel (38) für die Übertragung eines die Zerstörung befehlenden Signales, das durch jedes elektronische Ticket empfangen wird, wenn es zur Entschleierung der verschleierten Signale eingesetzt wird, sowie Mittel (108) zum Empfang des Zerstörungsbefehlssignals und zur Hervorbringung eines Ausgangssignals zur permanenten Zerstörung eines Abschnitts (80) des Entschleierungsschaltkreises des Tickets umfaßt, wodurch das Ticket nicht wiederverwendbar ist.

9.  Gerät zur Entschleierung übermittelter Fernsehsignale mit Entschleierungsmitteln (54), die einen Eingang (52) zum Empfang der Fernsehsignale und einen Ausgang (58) zum Ankoppeln der Fernsehsignale an einen Videoempfänger (60); einem elektronischen Ticket (56), das entfernbar an den Entschleierungsmitteln angeschlossen ist, wobei die Entschleierungssignale durch den Ausgang (58) zu dem Videoempfänger für die Betrachtung eingespeist werden; und einer Verzögerungsleitung (76); dadurch **gekennzeichnet,** daß:
    die Entschleierungsmittel (54) für die Entschleierung verschleierter Fernsehsignale sind, wobei die verschleierten Fernsehsignale durch Entschleierungsmittel in Kombination auf dem Ticket und auf der Entschleierungseinheit entschleiert werden; und daß das elektronische Ticket (56) einen Entschleierungsschaltkreis umfaßt, der die Verzögerungsleitung (76) für den Empfang der verschleierten Signale und für die Hervorbringung eines Ausgangs umfaßt.

10. Gerät nach einem der Ansprüche 1 bis 9, bei dem die Deaktivierungsmittel eine schmelzbare Verbindung (80) in den Entschleierungsmitteln in dem Ticket; eine Stromquelle (136); und Mittel zur Ankopplung der Stromquelle an die schmelzbare Verbindung umfassen, um die Verbindung zu zerstören, wenn der Ausgang der Überprüfungsmittel (126) ein unautorisiertes Ticket anzeigt.

11. Gerät nach Anspruch 10, das ein ROM (122) umfaßt, das auf dem Ticket zur Bildung der Überprüfungsmittel des Tickets gebildet ist.

12. Gerät nach einem der vorhergehenden Ansprüche, bei dem die Entschleierungsmittel auf dem Ticket ein Oberflächenakustikwellengerät (76) umfassen.

13. Gerät nach einem der vorhergehenden Ansprüche, das Mittel (68) auf dem Ticket (56) zur Wiedergewinnung der Synchronisationssignale umfaßt.

14. Gerät nach einem der vorhergehenden Ansprüche, das ein Oberflächenakustikwellengerät (68) umfaßt, das einen Bandpaßfilter als Teil des elektronischen Tickets zur Bereitstellung eines Schaltkreises zur Wiedergewinnung der Synchronisationssignale bildet.

15. Gerät nach Anspruch 14, bei dem die Mittel (68) zur Wiedergewinnung der Synchronisationssignale aus einem zweiten Oberflächenakustikwellengerät gebildet sind.

16. Gerät nach Anspruch 15, bei dem die Entschleierungsmittel (76) des Tickets und die Mittel (68) zur Wiedergewinnung der Synchronisationssignale beide auf einem gemeinsamen Oberflächenakustikwellengerät gebildet sind.

17. Ein Verfahren zur selektiven Übertragung erkennbarer Fernsehsignale zu einem Videoempfänger (60), **gekennzeichnet** durch die Schritte des Verschleierns (5) der Fernsehsignale für die Übertragung; des Empfangens (48,50) der gesendeten, verschleierten Fernsehsignale; und des Bereitstellens eines elektronischen Tickets (56) für den ausgesuchten Videoempfänger zum Empfang und zur Entschleierung eines vorgewählten verschleierten Fernsehsignals und zur Ankopplung des entschleierten Signals an den Empfänger als erkennbare Signalinformation, wobei das Ticket einen Entschleierungsschaltkreis umfaßt, das eine Verzögerungsleitung (76) zum Empfang der verschleierten Signale und zur Hervorbringung mindestens eines partiell entschleierten Fernsehsignals an seinem Ausgang umfaßt.

18. Ein Verfahren nach Anspruch 17, bei dem vorgewählte elektrische Verbindungen (179) an dem elektronischen Ticket (56) in Übereinstimmung mit einem Überprüfungscode geformt sind und bei dem mindestens ein Abschnitt (80) des Entschleierungsschaltkreises des elektronischen Tickets deaktiviert wird, wenn die Verbindungen an dem elektronischen Ticket nicht mit dem Überprüfungscode übereinstimmen.

19. Ein elektronisches Ticket für die Entschleierung gesendeter Fernseh- und Synchronisationssignale zur Benutzung in einem Videoempfänger, das erste Anschlüsse (196) zum Empfang der Fernsehsignale und zweite Anschlüsse (198) zur Ankopplung des partiell entschleierten Ausgangsfernsehsignals an den Videoempfänger umfaßt, **gekennzeichnet** durch:
    einen Entschleierungsschaltkreis einschließlich einer Verzögerungsleitung (76), deren Eingang an den ersten Anschlüssen angeschlossen ist, um an ihrem Ausgang zumindest ein partiell entschleiertes Fernsehsignal hervorzubringen, und durch Mittel (212, 214) zum Einschließen der ersten und zweiten Anschlüsse und der Verzögerungsleitung (76) in einer einstückigen Verpackung, wodurch das Ticket als eine entfernbare Einsteckeinheit benutzt werden kann.

20. Ein elektronisches Ticket nach Anspruch 19, das Mittel zur Bildung der einschließenden Mittel (212, 214) um den Entschleierungskreis in der Weise bildet, daß, wenn ein Versuch gemacht wird, die einstückige Verpackung zu öffnen, der Entschleierungsschaltkreis physisch zerstört wird.

21. Ein elektronisches Ticket nach Anspruch 20, bei dem die physische Zerstörung des Entschleierungsschaltkreises durch die Zerstörung von Verbindungen (66,74,82,84) zu den Anschlüssen (196,198) bei dem Versuch des Öffnens der einstückigen Verpackung bewirkt wird.

22. Ein elektronisches Ticket nach einem der Ansprüche 19 bis 21, das Mittel (122) zur Überprüfung der Gültigkeit eines Tickets (56) für die Benutzung bei der Entschleierung eines vorgewählten Videoprogrammsignals und Mittel (80) umfaßt, die auf die Überprüfungsmittel mit der Zerstörung der Benutzbarkeit des Tickets reagieren, wenn ein Fernsehsignal entschleiert wird, das nicht dem vorgewählten Signal entspricht.

23. Ein elektronisches Ticket nach Anspruch 22, das Mittel (179) zur Bildung eines codierten Satzes von dritten Anschlüssen (BIT 1 bis BIT 4) auf dem Ticket (56), um einen Code zu haben, der, repräsentativ für ein gültiges Ticket, überprüfbar ist für ein bestimmtes vorgewähltes Videoprogramm, und Mittel (80) zur Zerstörung der Verwendbarkeit des Tickets umfaßt, wenn das Ticket nicht als gültig überprüft wird.

24. Ein elektronisches Ticket nach Anspruch 23, das eine schmelzbare Verbindung (80) in dem elektronischen Ticket umfaßt, das für den Betrieb erforderlich ist, sowie Mittel (82), an die Energie geliefert wird, um die Verbindung zu zerstören, wenn das elektronische Ticket nicht als gültig überprüft wird.

25. Ein elektronisches Ticket nach einem der Ansprüche 19 bis 24, das ein Oberflächenakustikwellengerät (76) auf dem Ticket zur Bildung des Entschleierungsschaltkreises umfaßt.

26. Ein elektronisches Ticket nach Anspruch 25, das einen Bandpaßfilter (68) auf dem Ticket zur Wiedergewinnung der Synschronisationssignale umfaßt.

27. Ein elektronisches Ticket nach Anspruch 26, das ein Oberflächenakustikwellengerät auf dem Ticket zur Bildung des Bandpaßfilters (68) umfaßt.

28. Ein elektronisches Ticket nach Anspruch 27, bei dem sowohl das Bandpaßfilter (68) als auch der Entschleierungsschaltkreis (76) auf demselben Oberflächenakustikwellengerät gebildet sind.

29. Ein elektronisches Ticket nach Anspruch 23, das ein ROM-Schaltkreis (122) auf dem Ticket umfaßt, der an den dritten Anschlüssen (BIT 2 bis BIT 4) zur Bildung des zu überprüfenden Codes angeschlossen ist.

FIG. 1

FIG. 2

19

FIG. 3  "ELECTRONIC TICKET" DESCRAMBLER

EP 0 140 705 B1

FIG. 4

DELAYED OUTPUT FROM TICKET SAW DEVICE 76

82

88

140  RF SWITCH

142

RFC
144  146

138

116

104

FROM DEMODULATOR 90

105

108

R2

R1

130

FROM DECODER 126

9V

R3

131

SWITCH DRIVER AND FUSE DESTRUCT CIRCUIT

117

RFC

TO NOTCH FILTER 118

FROM RF SWITCH 102

RF SWITCH , SWITCH DRIVER AND FUSE DESTRUCT CIRCUITRY

FIG. 5

170  172  174  76

DELAYED OUTPUT

82  168

INPUT TRANSDUCER  148

150

DELAYED OUTPUT TRANSDUCER  160

162

80

154

B. P. FILTER OUTPUT TRANSDUCER  158  159  163  166

156

SAW DEVICE (PART OF PLUG IN TICKET)

152

161  84

66 , 74

INPUT

BAND PASS FILTER OUTPUT

21

EP 0 140 705 B1

BIT 1    BIT 2

180 — SHEAR PLANE

176

179    179    122

57

166

82    168

68, 76

170    162

80    158

163

56

66, 74

84

178

179    182

**FIG. 6**

SHEAR PLANE

TICKET INCLUDING
LEAD WIRED
READ ONLY MEMORY (ROM)

BIT 3    BIT 4

186    187    190

188    202

54    58

52    194

200    192

**FIG. 7**

196    56

198

**FIG. 8**

FIG. 9

FIG. 10

FIG. 11